# EUROPEAN PATENT SPECIFICATION

(11) **EP 2 884 822 B1**
(45) Date of publication and mention of the grant of the patent: **07.03.2018**
(21) Application number: 13871056.1
(22) Date of filing: 18.03.2013
(51) Int. Cl.: H05B 37/02, H04R 3/00

(54) **MULTI-FUNCTIONAL WIRELESS LED DEVICE AND MULTI-FUNCTIONAL WIRELESS LOUDSPEAKER BOX SYSTEM**
MULTIFUNKTIONALE DRAHTLOSE LED-VORRICHTUNG UND MULTIFUNKTIONALES DRAHTLOSES LAUTSPRECHERBOXENSYSTEM
DISPOSITIF À LED SANS FIL MULTIFONCTION ET SYSTÈME D'ENCEINTE ACOUSTIQUE SANS FIL MULTIFONCTION

(30) Priority: 14.01.2013 CN 201310013677
(43) Date of publication of application: 17.06.2015
(73) Proprietor: Zhejiang Shenghui Lighting Co., Ltd, Jiaxing, Zhejiang 314015 (CN)
(72) Inventor: WANG, Xia, Jiaxing Zhejiang 314015 (CN); SUN, Chaoqun, Jiaxing Zhejiang 314015 (CN); SHEN, Jinxiang, Jiaxing Zhejiang 314015 (CN)
(74) Representative: Jöstingmeier, Martin
(86) International application number: PCT/CN2013/072802
(87) International publication number: WO 2014/107934

(56) References cited:
- CN-A- 102 300 133
- CN-A- 102 647 640
- CN-A- 102 858 060
- CN-U- 201 697 092
- FR-A1- 2 973 622
- US-A1- 2005 275 626
- US-A1- 2008 225 510
- US-A1- 2012 126 700

## Description

### TECHNICAL FIELD

The present invention relates to the field of light emitting diode (LED) technologies and, more particularly relates to a multifunctional wireless LED device and a multifunctional wireless speaker system.

### BACKGROUND TECHNOLOGY

The occurrence of wireless technologies free users from the amount of wirings needed to set up equipment, wireless technologies are widely used in various types of electronics, as people's living standards are improving, these products become universal. Because of many advantages such as energy conservation, environment protection, controllable lighting, solid-state lighting, long operational lifetime, etc., LEDs have been widely used in various lighting applications such as public place lightings, office and indoor lightings, etc. Controllable lighting not only conserves energy, but also brings more experiences to various spaces in people's life, wireless lighting control is well received by the consumers as a new light control method.

Meanwhile most speakers in the current market reply on wired connections, these speakers have cumbersome wiring, and are bulky, there are certainly some combinations of wireless speaker and lighting device, but they need to add a dedicated wireless transmitter to send audio signals and to perform specialized control, this type of system are often relatively large, relatively expensive, basically not suitable for smart devices such as smartphones that have been quickly developing, and have poor matching degree.

### SUMMARY OF THE INVENTION

### Solution to the problem

### Technical solution

The present invention overcomes the disadvantages in the above-mentioned prior art, and provides a multifunctional wireless LED device and a multifunctional wireless speaker system that do not need to change current wiring pattern, are easy to wire, do not need to include any separate devices like wireless transmitter, remote control or peripheral light control switch, etc.

The technical solution of the present invention is implemented as follows:
a multifunctional wireless LED device that accepts control from a smart terminal, the multifunctional wireless LED device includes:
at least an LED driver and power supply unit, configured to drive an LED light source assembly and supply power to the entire LED device;
at least a wireless transceiver module, configured to receive audio signals or control signals from a smart terminal, and send to a control unit for processing;
at least a control unit, configured to process audio signals or other control signals and to perform corresponding controls;
   FR 2973622 discloses a communication device that comprises a light source base, referred to as 'upstream', a light source powered by said base, a means of receiving radio signals, powered by said base, configured to receive radio signals emitted by at least one first computer system, and a means of emitting radio signals, powered by said base, configured to retransmit radio signals received by the reception means towards at least one second computer system so as to extend the radio communications range between the first computer system and the second computer system.
   US 2005/275626 relates to a lighting control device including an external interface for receiving an external input.
at least a wireless transceiver unit, configured to forward audio signals or control signals processed by the control unit to another LED device;
at least an audio power amplifier unit, configured to receive processed audio signals from the control unit and to drive a speaker unit to play audio signals;
at least a speaker unit, configured to connect to the audio power amplifier unit, and to play the audio signals; and
at least an LED light source assembly configured to emit light and to receive the control signals from the control unit to adjust the emitted light accordingly.

Advantageously, the multifunctional wireless LED device may further include at least an audio codec unit, the audio codec unit is respectively connected to the wireless transceiver module, the wireless transceiver unit, the control unit, and the audio power amplifier unit, and is configured to convert digital audio signals processed by the control unit to analog signals and to transmit the analog signals to the audio power amplifier unit and the wireless transceiver unit.

A multifunctional wireless LED device, that accepts control a smart terminal, the multifunctional wireless LED device includes:
at least an LED driver and power supply unit, configured to drive an LED light source assembly and supply power to the entire LED device;
at least a control unit, configured to process audio signals or other control signals and to perform corresponding controls;
at least a wireless transceiver unit configured to receive audio signals or control signals, and to forward the received signals to another LED device within its signal coverage range;
at least an audio power amplifier unit configured to receive processed audio signals from the control unit and to drive a speaker unit;
at least a speaker unit configured to connect to the audio power amplifier unit and to play the audio signals; and
at least an LED light source assembly configured to emit light and receive the control signals from the control unit to adjust the emitted light accordingly.

Advantageously, the multifunctional wireless LED device may further include an audio codec unit, the audio codec unit is respectively connected to the wireless transceiver unit, the control unit, and the audio power amplifier unit, and is configured to convert the digital audio signals processed by the control unit to analog signals and to transmit the analog signals to the audio power amplifier unit and the wireless transceiver unit.

Advantageously, the control unit is a micro-controller, digital signal processor, or IC controller, or a combination thereof, and processes inputted audio signals using algorithms.

Advantageously, the wireless transceiver module supports 2.4 GHz, 5.2 GHz, 5.8 GHz, or a combination of the above working frequencies, and supports bi-directional transmission.

Advantageously, the wireless transceiver unit supports 2.4 GHz, 5.2 GHz, 5.8 GHz, or a combination of the above working frequencies, and supports bi-directional transmission.

A multifunctional sound system, includes at least two multifunctional wireless LED devices each integrates both the wireless transceiver module and the wireless transceiver unit, and at least a smart terminal configured to monitor and remotely control the multifunctional wireless LED devices in the system, the smart terminal communicates and controls each multifunctional wireless LED device, or at least one of the multifunctional wireless LED devices may receive audio signals or control signals sent from the smart terminal, and send the received signals to other multifunctional wireless LED devices within its wireless signal coverage range.

Advantageously, the smart terminal may arbitrarily set one of the multifunctional wireless LED devices as a central device, and then configure other multifunctional wireless LED device(s) as receiving device(s); the central device may receive control signals or audio signals from the smart terminal, and send the signals to all other receiving device(s).

A multifunctional sound system, includes at least a multifunctional wireless LED device that integrates both the wireless transceiver module and the wireless transceiver unit, at least a multifunctional wireless LED device with just one wireless transceiver unit, and at least a smart terminal configured to monitor and remotely control the multifunctional wireless LED devices in the system, the smart terminal sets the multifunctional wireless LED device that integrates both the wireless transceiver module and the wireless transceiver unit as a central device, and then configures the multifunctional wireless LED device(s) with just one wireless transceiver unit as receiving device(s); the central device may receive audio signals or control signals sent from the smart terminal, and send the received signals to all other receiving device(s).

Advantageously, the smart terminal may be a smartphone, a smart TV, a tablet, a desktop computer, or a wireless Dongle, etc.

### Advantageous effects of the invention

### Advantageous effects

The advantageous effects of the present invention are as follows:
the present invention first provides two types of multifunctional wireless LED devices integrated with audio play functionalities, the first type is an LED device that integrates both a wireless transceiver module and a wireless transceiver unit, where the wireless transceiver module is responsible for maintaining communication with the smart terminal, and the wireless transceiver unit is responsible for maintaining communication with other LED devices, such configuration can prevent the occurrence of communication signal interference; the second type is an LED device that only includes a wireless transceiver unit, the wireless receiver unit is only responsible for maintaining communication with other LED devices, such configuration can save costs.

Further, the LED device may further include an audio codec unit according to practical need, which may be configured to decode digital audio signals, so that the digital audio signals can be normally played.

Furthermore, the present invention provides a multifunctional wireless sound system, there are two types of the system, the first type combines a smart terminal and at least two aforementioned first type LED devices, the smart terminal may control any one of the LED devices, the LED device that controlled by the smart terminal may forward audio signals and control signals to other LED devices; the second type combines the smart terminal with the first type LED device and the second type LED device, the smart terminal sends audio and control signals to the first type LED device, and then the first type LED device forwards the signals to the second type LED device.

Using the aforementioned first type multifunctional wireless sound system as an example, the operation process includes: the LED driver and power supply unit drives the LED light source assembly, and powers up the entire multifunctional wireless LED device, the smart terminal sends wireless digital audio and control signals to the wireless transceiver module, the wireless transceiver module sends the received wireless digital audio signals and control signals to the control unit, then the control unit processes the received digital audio signals using algorithms and sends the processed signals to the wireless transceiver unit and the audio power amplifier unit, or the wireless transceiver unit sends the received wireless digital audio signal to the audio codec unit, and then the audio codec unit sends the processed audio signals to the audio power amplifier unit. The wireless transceiver unit sends the audio signals and control signals to other LED devices, the control unit sends feedback control signals to the smart terminal through the wireless transceiver module.

Comparing with the prior art, the present invention have the following advantages: easy to install and use, no need to change current wiring pattern, do not require adding any devices like wireless audio signal transmitter, remote control, or peripheral light control switch, etc., support wireless lighting control, provide daily lighting, and can directly replace traditional lights and most existing LED lights; have a simple overall structure, low cost, highly versatile; support wireless audio, provide great audio-visual enjoyment, and can be installed in a wide range, also the locations of the LED devices may be arbitrarily adjusted, arbitrarily configured, may be applied in various occasions, and have high practical value and application prospect.

### BRIEF DESCRIPTION OF THE DRAWINGS

### Description of the drawings

FIG. 1 is an exemplary block diagram of a multifunctional LED device in Embodiment 1 of the present invention;
FIG. 2 is an exemplary block diagram of a multifunctional speaker system in Embodiment 1;
FIG. 3 is an exemplary block diagram of another form of a multifunctional speaker system in Embodiment 1; and
FIG.4 is an exemplary block diagram of a multifunctional LED device in Embodiment 2.

### EMBODIMENTS OF THE INVENTION

### Embodiments of the present invention

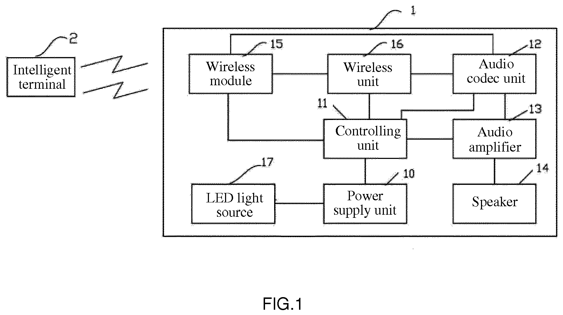

Specific embodiments of the present invention are described below:
Embodiment 1: as shown in FIG.1, the multifunctional wireless LED device 1 of the present invention includes an LED driver and power supply unit 10, a control unit 11, an audio codec unit 12, an audio power amplifier unit 13, a speaker unit 14, a wireless transceiver module 15, a wireless transceiver unit16, and an LED light source assembly 17.

The LED driver and power supply unit 10 drives the LED light source assembly 17, and supplies power to the entire multifunctional wireless LED device 1.

When communicating with the smart terminal 2, the smart terminal 2 transmits wireless digital audio and control signals to the wireless transceiver module 15, the wireless transceiver module 15 sends the received wireless digital audio and control signals to the control unit 11, then the control unit 11 processes the received digital audio signals using algorithms, and then sends the processed audio signals to the wireless transceiver unit 16 and the audio power amplifier unit 13, or the wireless transceiver module 15 sends the received wireless digital audio signal to the audio codec unit 12, then the audio codec unit 12 sends the processed audio signals to the audio power amplifier unit 13. The audio codec unit 12 connects to the wireless transceiver unit 16, the control unit 11 sends feedback control signal to the smart terminal 2 through the wireless transceiver module 15. The wireless transceiver module 15 may also directly connect to the wireless transceiver unit 16.

The control unit 11 may be a microprocessor, a digital processor, a digital integrated circuit, or a combination thereof, and may process inputted audio and video signals using algorithms. The control unit 11 connects to the wireless transceiver module 15, and obtains digital audio and control signals received by the wireless transceiver module 15 from the smart terminal 2, the control unit 11 performs local corresponding controls and data processing according to the wireless digital audio and control signals, and send the processed signals to the audio power amplifier unit 13 and the wireless transceiver 16, the audio power amplifier unit 13 is connected to the speaker unit 14. The control unit 11 communicates with the wireless transceiver unit 16, and use the wireless transceiver unit 16 to send control information to wireless transceiver units 16 of other LED devices.

In the present embodiment, the wireless transceiver module 15 and the wireless transceiver unit 16 may support 2.4 GHz, 5.2 GHz, 5.8 GHz, and other working frequencies or the combinations thereof, and support bi-directional transmission. Additionally, the wireless transceiver module 15 and the wireless transceiver unit 16 may connect to the internet, and realize remote control.

The LED driver and power supply unit 10 drives the LED light source assembly 17, the control unit 11 generates Pulse Width Modulation (PWM) waves to adjust lighting, the control unit 11 directly connects to the LED driver and power supply unit, the control unit 11 may configure and output PWM signals, and may configure PWM signals with a determined frequency and an adjustable duty cycle or PWM signals with a determined duty cycle with an adjustable frequency.

Moreover, the smart terminal 2 in the present invention can be terminals such as a smartphone, a smart television, a tablet, a desktop computer, a wireless dongle, etc.

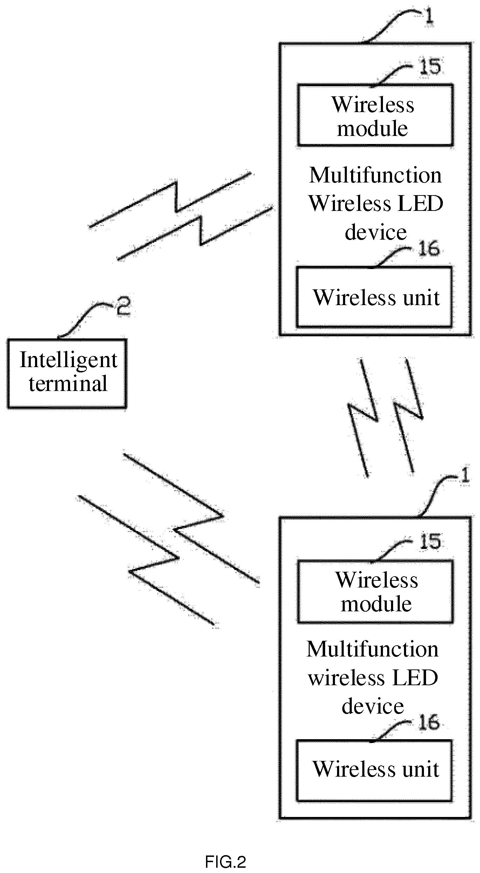

FIG. 2 is an exemplary block diagram of a multifunctional wireless speaker system in the present invention. As shown in FIG. 2, the wireless sound system in the present invention includes several aforementioned multifunctional wireless LED devices 1, the present embodiment includes two multifunctional wireless LED device 1 that form 2.0-channel system, more multifunctional wireless LED devices may be added as needed to form 2.1-channel, 5.1-channel, or 7.1-channel wireless speaker systems, or a wireless speaker system having any number of audio channels may be freely selected and configured.

Each multifunctional wireless LED device 1 is configured to include a wireless transceiver module 15 and a wireless transceiver unit 16, the multifunctional wireless speaker system may set any one of the multifunctional wireless LED devices as a central device through the smart terminal 2, after setting one multifunctional wireless LED device as the central device, the remaining device(s) may be set as receiving device(s) according to an application program on the smart terminal 2, the central device sends wireless audio and control signals to all other receiving device(s).

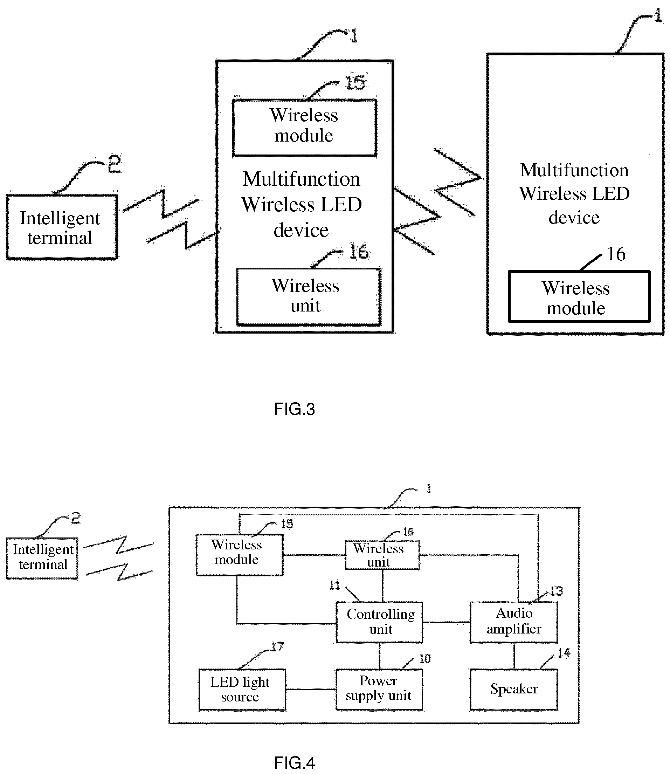

FIG. 3 is an exemplary block diagram of another form of a multifunctional wireless speaker system in the present invention. Wherein, the wireless speaker system shown in FIG. 3 has a similar structure as the wireless speaker system shown in FIG. 2, the difference lies in that: only one multifunctional wireless LED device is configured to include both a wireless transceiver module 15 for communicating with the smart terminal 2 and a wireless transceiver unit 16, the rest multifunctional wireless LED devices are configured to only include the wireless transceiver units 16, the smart terminal 2 sets the one multifunctional wireless LED devices with the wireless transceiver module 15 as a central device, and sets the rest multifunctional wireless LED devices as receiving devices, the central device receives wireless digital audio signals and control signals from the smart terminal 2, and the central device sends the wireless digital audio signals and control signals to other receiving devices.

Embodiment 2: FIG. 4 is an exemplary block diagram of a multifunctional wireless LED device of the present embodiment, wherein, the multifunctional wireless LED device shown in FIG. 4 has a similar structure as the multifunctional wireless LED device shown in FIG. 1, the difference lies in that: the multifunctional wireless LED device 1 shown in FIG. 4 does not include an audio codec unit, the smart terminal transmits wireless digital audio and control signals to the wireless transceiver module 15, the wireless transceiver module 15 sends the received wireless digital audio and control signals to the control unit 11 and the audio power amplifier unit 13, the control unit 11 processes the received digital audio signals using algorithms and then sends the processed audio signals to the audio power amplifier unit 13 and the wireless transceiver unit 16, the wireless transceiver unit 16 may connect to the audio power amplifier unit 13, the audio power amplifier unit 13 connects to the speaker unit 14.

## Claims

1. A multifunctional LED device (1), comprising:
- an LED driver and power supply unit (10) configured to supply power to an LED lighting unit (17) and drive the multifunctional LED device (1);
- a wireless transceiver module (15) configured to receive and send audio signals and control signals to and from a remote smart terminal (2);
- a control unit (11) configured to process audio signals and control signals and directly connecting the LED driver and power supply unit (10), wherein the wireless transceiver module (15) sends the received audio signals and the received control signals to the control unit (11) for further processing;
- a wireless transceiver unit (16) configured to forward audio signals or control signals processed by the control unit to another LED device,
- an audio power amplifier (13) which is configured to receive processed audio signals from the control unit (11) and to drive a speaker (14) for playing the received audio signals and
- an LED lighting unit (17) configured to emit light
**characterized in that**
- the control unit (11) is further configured to generate and output Pulse Width Modulation signals to adjust lighting with a determined frequency and an adjustable duty cycle or Pulse Width Modulation signals with a determined duty cycle with an adjustable frequency
- the LED power supply (10) receives the Pulse Width Modulation signals from the control unit (11) and drives the LED lighting unit (17) to adjust the emitted light accordingly;
- wherein the LED power supply unit (10), the wireless transceiver module (15), the wireless transceiver unit(16), the control unit (11), the speaker (14), the audio power amplifier (13), and the LED lighting unit (17) are integrated in the one multifunctional LED device (1).

2. The multifunctional LED device according to claim 1, further includes:
an audio codec unit (12) configured to connect to the control unit (11) and the audio power amplifier (13), to convert the audio signals received from the control unit to analog signals, and to send the analog signals to the audio power amplifier.

3. The multifunctional LED device according to claim 1 or 2, wherein the control unit (11) is a micro-controller, digital signal processor, or IC controller, or a combination thereof, and the control unit processes audio signals.

4. The multifunctional LED device according to claim 1 or 2, wherein the wireless transceiver module (15) and the wireless transceiver unit (16) support 2.4 GHz, 5.2 GHz, 5.8 GHz, or a combination of the above working frequencies and support bi-directional transmission.

5. A multifunctional sound system, **characterized in that** it comprises a first multifunctional LED device with two wireless transceivers as defined in claim 1 including a wireless transceiver module (15) and a wireless transceiver unit (16) and **in that** it further comprises:
- a second multifunctional LED device with one wireless transceiver; and
- a smart terminal configured to monitor and remotely control the multifunctional LED devices;
wherein
- the first multifunctional LED device receives audio signals and control signals from the smart terminal through the wireless transceiver module (15) and sends the received audio signals and control signals to the second multifunctional LED device through the wireless transceiver unit (16),
- the second multifunctional LED device further includes an LED power supply unit, a control unit, a speaker, an audio power amplifier, and an LED lighting unit, wherein:
o the LED power supply unit is configured to supply power to the LED lighting unit and drive the second multifunctional LED device;
∘ the wireless transceiver module (15) is configured to receive the audio signals and control signals from the wireless transceiver unit (16) of the first multifunctional LED device, and transmit the received audio signals and control signals to the control unit (11);
∘ the control unit (11) is configured to process the audio signals and the control signals, and control other components of the second multifunctional LED device;
∘ the audio power amplifier is configured to receive processed audio signals from the control unit and drive the speaker for playing the processed audio signals;
∘ the speaker is configured to play the processed audio signals received from the audio power amplifier; and
∘ the LED lighting unit is configured to emit light and adjusts the emitted light according to the processed control signals from the control unit.

6. The multifunctional speaker system according to claim 5, wherein the smart terminal is a smartphone, a smart TV, a tablet, a desktop computer, or a wireless Dongle.

## Patentansprüche

1. Multifunktionale LED-Einrichtung (1), umfassend:
- eine LED-Treiber- und Stromversorgungseinheit (10), die konfiguriert ist, um eine LED-Beleuchtungseinheit (17) mit Strom zu versorgen und die multifunktionale LED-Einrichtung (1) anzutreiben;
- ein drahtloses Transceiver-Modul (15), das konfiguriert ist, um Audiosignale und Steuersignale zu und von einem entfernten Smart-Endgerät (2) zu empfangen und zu senden;
- eine Steuereinheit (11), die konfiguriert ist, um Audiosignale und Steuersignale zu verarbeiten und die die LED-Treiber- und Stromversorgungseinheit (10) direkt verbindet, wobei das drahtlose Transceiver-Modul (15) die empfangenen Audiosignale und die empfangenen Steuersignale zur weiteren Verarbeitung an die Steuereinheit (11) sendet;
- eine drahtlose Transceiver-Einheit (16), die konfiguriert ist, um von der Steuereinheit verarbeitete Audiosignale oder Steuersignale an eine andere LED-Einrichtung weiterzuleiten,
- ein Audio-Leistungsverstärker (13), der konfiguriert ist, um verarbeitete Audiosignale von der Steuereinheit (11) zu empfangen und einen Lautsprecher (14) anzusteuern, um die empfangenen Audiosignale abzuspielen, und
- eine LED-Beleuchtungseinheit (17), die konfiguriert ist, um Licht zu emittieren, **dadurch gekennzeichnet, dass**
- die Steuereinheit (11) weiterhin konfiguriert ist zum Erzeugen und Ausgeben von Pulsweitenmodulationssignalen, zur Anpassung der Beleuchtung mit einer bestimmten Frequenz und einer einstellbaren Einschaltdauer, oder von Pulsweitenmodulationssignalen mit einer bestimmten Einschaltdauer mit einer einstellbaren Frequenz;
- die LED-Stromversorgungseinheit (10) die Pulsweitenmodulationssignale von der Steuereinheit (11) empfängt und die LED-Beleuchtungseinheit (17) ansteuert, um das emittierte Licht entsprechend zu einzustellen;
- wobei die LED-Stromversorgungseinheit (10), das drahtlose Transceiver-Modul (15), die drahtlose Transceiver-Einheit (16), die Steuereinheit (11), der Lautsprecher (14), der Audio-Leistungsverstärker (13), und die LED-Beleuchtungseinheit (17) in die eine multifunktionale LED-Einrichtung (1) integriert sind.

2. Multifunktionale LED-Einrichtung nach Anspruch 1, weiterhin aufweisend:
eine Audio-Codec-Einheit (12), die konfiguriert ist, um die Steuereinheit (11) und den Audio-Leistungsverstärker (13) zu verbinden, um die von der Steuereinheit empfangenen Audiosignale in analoge Signale umzuwandeln und die analogen Signale an den Audio-Leistungsverstärker zu senden.

3. Multifunktionale LED-Einrichtung nach Anspruch 1 oder 2, wobei die Steuereinheit (11) ein Mikrocontroller, ein digitaler Signalprozessor oder ein IC-Controller, oder eine Kombination davon ist und die Steuereinheit Audiosignale verarbeitet.

4. Multifunktionale LED-Einrichtung nach Anspruch 1 oder 2, wobei das drahtlose Transceiver-Modul (15) und die drahtlose Transceiver-Einheit (16) 2,4 GHz, 5,2 GHz, 5,8 GHz oder eine Kombination der obigen Arbeitsfrequenzen unterstützen und eine bidirektionale Übertragung unterstützen.

5. Ein multifunktionales Soundsystem,
**dadurch gekennzeichnet, dass**
es eine erste multifunktionale LED-Einrichtung mit zwei drahtlosen Transceivern wie in Anspruch 1 definiert umfassend ein drahtloses Transceiver-Modul (15) und eine drahtlose Transceiver-Einheit (16) umfasst, und dass es weiterhin umfasst:
- eine zweite multifunktionale LED-Einrichtung mit einem drahtlosen Transceiver; und
- ein Smart-Endgerät, das konfiguriert ist, um die multifunktionalen LED-Einrichtungen zu überwachen und fernzusteuern;
wobei
- die erste multifunktionale LED-Einrichtung Audiosignale und Steuersignale von dem Smart-Endgerät durch das drahtlose Transceiver-Modul (15) empfängt und die empfangenen Audiosignale und Steuersignale an die zweite multifunktionale LED-Einrichtung durch die drahtlose Transceiver-Einheit (16) sendet,
- die zweite multifunktionale LED-Einrichtung weiterhin eine LED-Stromversorgungseinheit, eine Steuereinheit, einen Lautsprecher, einen Audio-Leistungsverstärker und eine LED-Beleuchtungseinheit umfasst, wobei
∘ die LED-Stromversorgungseinheit konfiguriert ist, um der LED-Beleuchtungseinheit Strom zuzuführen und die zweite multifunktionale LED-Einrichtung zu versorgen;
∘ das drahtlose Transceiver-Modul (15) konfiguriert ist, um Audiosignale und Steuersignale von der drahtlosen Transceiver-Einheit (16) der ersten multifunktionalen LED-Einrichtung zu empfangen, und die empfangenen Audiosignale und Steuersignale an die Steuereinheit (11) zu senden;
∘ die Steuereinheit (11) konfiguriert ist, um die Audiosignale und Steuersignale zu verarbeiten, und um andere Komponenten der zweiten multifunktionalen LED-Einrichtung zu steuern;
∘ der Audio-Leistungsverstärker konfiguriert ist, um verarbeitete Audiosignale von der Steuereinheit zu empfangen und den Lautsprecher zum Abspielen der verarbeiteten Audiosignale zu betreiben;
∘ der Lautsprecher konfiguriert ist, um die verarbeiteten, vom Audio-Leistungsverstärker empfangenen Audiosignale abzuspielen; und
∘ die LED-Beleuchtungseinheit konfiguriert ist, um Licht zu emittieren und das emittierte Licht entsprechend den verarbeiteten Steuersignalen der Steuereinheit einzustellen.

6. Multifunktionales Lautsprechersystem nach Anspruch 5, wobei das Smart-Endgerät ein Smartphone, ein Smart-TV, ein Tablet, ein Desktop Computer oder ein drahtloser Dongle ist.

## Revendications

1. Dispositif à LED multifonction (1), comprenant :
- une unité de contrôle et d'alimentation de LED (10) configurée pour fournir de l'énergie à une unité d'éclairage à LED (17) et contrôler le dispositif à LED multifonction (1) ;
- un module émetteur-récepteur sans fil (15) configuré pour recevoir et envoyer des signaux audio et des signaux de commande depuis et vers un terminal intelligent distant (2) ;
- une unité de commande (11) configurée pour traiter des signaux audio et des signaux de commande et connectant directement l'unité de contrôle et d'alimentation de LED (10), le module émetteur-récepteur sans fil (15) envoyant les signaux audio reçus et les signaux de commande reçus à l'unité de commande (11) pour traitement supplémentaire ;
- une unité émettrice-réceptrice sans fil (16) configurée pour transmettre des signaux audio ou des signaux de commande traités par l'unité de commande à un autre dispositif à LED,
- un amplificateur de puissance audio (13) qui est configuré pour recevoir des signaux audio traités de l'unité de commande (11) et pour contrôler un haut-parleur (14) afin de reproduire les signaux audio reçus et
- une unité d'éclairage à LED (17) configurée pour émettre de la lumière,
**caractérisé en ce que**
- l'unité de commande (11) est en outre configurée pour générer et délivrer des signaux de modulation de largeur d'impulsion pour régler l'éclairage avec une fréquence déterminée et un rapport cyclique réglable ou des signaux de modulation de largeur d'impulsion avec un rapport cyclique déterminé et une fréquence réglable ;
- l'unité d'alimentation de LED (10) reçoit les signaux de modulation de largeur d'impulsion de l'unité de commande (11) et contrôle l'unité d'éclairage à LED (17) pour régler la lumière émise de façon correspondante ;
- l'unité d'alimentation de LED (10), le module émetteur-récepteur sans fil (15), l'unité émettrice-réceptrice sans fil (16), l'unité de commande (11), le haut-parleur (14), l'amplificateur de puissance audio (13) et l'unité d'éclairage à LED (17) étant intégrés dans ledit dispositif à LED multifonction (1).

2. Dispositif à LED multifonction selon la revendication 1, comprenant en outre :
une unité de codec audio (12) configurée pour être connectée à l'unité de commande (11) et à l'amplificateur de puissance audio (13), pour convertir les signaux audio reçus de l'unité de commande et pour envoyer les signaux analogiques à l'amplificateur de puissance audio.

3. Dispositif à LED multifonction selon la revendication 1 ou 2, dans lequel l'unité de commande (11) est un microcontrôleur, un processeur de signaux numériques, un contrôleur de Cl ou une combinaison de ceux-ci, et l'unité de commande traite des signaux audio.

4. Dispositif à LED multifonction selon la revendication 1 ou 2, dans lequel le module émetteur-récepteur sans fil (15) et l'unité émettrice-réceptrice sans fil (16) prennent en charge 2,4 GHz, 5,2 GHz, 5,8 GHz, ou une combinaison des fréquences de travail ci-dessus, et prennent en charge une transmission bidirectionnelle.

5. Système audio multifonction, **caractérisé en ce qu'**il comprend un premier dispositif à LED multifonction avec deux émetteurs-récepteurs sans fil tel que défini dans la revendication 1, incluant un module émetteur-récepteur sans fil (15) et une unité émettrice-réceptrice sans fil (16), et **en ce qu'**il comprend en outre :
- un second dispositif à LED multifonction avec un émetteur-récepteur sans fil ; et
- un terminal intelligent configuré pour surveiller et commander à distance les dispositifs à LED multifonction ;
dans lequel
- le premier dispositif à LED multifonction reçoit des signaux audio et des signaux de commande du terminal intelligent via le module émetteur-récepteur sans fil (15) et envoie les signaux audio et les signaux de commande reçus au second dispositif à LED multifonction via l'unité émettrice-réceptrice sans fil (16),
- le second dispositif à LED multifonction inclut en outre une unité d'alimentation de LED, une unité de commande, un haut-parleur, un amplificateur de puissance audio et une unité d'éclairage à LED, dans lequel :
∘ l'unité d'alimentation de LED est configurée pour fournir de l'énergie à l'unité d'éclairage à LED et contrôler le second dispositif à LED multifonction ;
∘ le module émetteur-récepteur sans fil (15) est configuré pour recevoir les signaux audio et les signaux de commande de l'unité émettrice-réceptrice sans fil (16) du premier dispositif à LED multifonction et transmettre les signaux audio et les signaux de commande reçus à l'unité de commande (11) ;
∘ l'unité de commande (11) est configurée pour traiter les signaux audio et les signaux de commande et commander d'autres composants du second dispositif à LED multifonction ;
∘ l'amplificateur de puissance audio est configuré pour recevoir des signaux audio traités de l'unité de commande et contrôler le haut-parleur pour reproduire les signaux audio traités ;
∘ le haut-parleur est configuré pour reproduire les signaux audio traités reçus de l'amplificateur de puissance audio ; et
∘ l'unité d'éclairage à LED est configurée pour émettre de la lumière et régler la lumière émise en fonction des signaux de commande traités provenant de l'unité de commande.

6. Système de haut-parleur multifonction selon la revendication 5, dans lequel le terminal intelligent est un téléphone intelligent, un téléviseur intelligent, une tablette, un ordinateur de bureau ou un dongle sans fil.
